# EUROPEAN PATENT APPLICATION

(11) **EP 4 006 850 A1**
(43) Date of publication of application: **01.06.2022**
(21) Application number: 21208385.1
(22) Date of filing: 16.11.2021
(51) Int. Cl.: G07B 17/00, A47G 29/14, G06Q 50/32, G07C 9/00

(54) **METHOD OF SHIPMENT WITHOUT LABEL**

(30) Priority: 27.11.2020 PL 43615720
(71) Applicant: Integer.pl S.A., 30-552 Kraków (PL)
(72) Inventor: Brzoska, Rafa, 30-552 Kraków (PL)
(74) Representative: Jedrzejewski, Michal

(57) **Abstract**

A method of posting a package without a label by means of an automatic scannerequipped multi-compartment transmitter-receiver device, comprised of the steps of remotely opening the door of the compartment of the automatic multi-compartment device, placing the package in the compartment of the automatic multi-compartment transmitter-receiver device, automatically locking the compartment door of the automatic multi-compartment transmitter-receiver device after its closure, whereby the label generated after completion of the postage process **characteristic in that** the entry of data to be placed on the postage label occurs via the sender's mobile device. The sender's mobile device is communicated with the automatic multi-compartment transmitter-receiver device via a central computer system that generates a virtual shipment with a unique postage code that remains the same throughout the process. The central computer system links the unique postage code to the code on the temporary label applied to the package after its removal from the compartment of the automatic multi-compartment transmitter-receiver device after the code on the temporary label has been scanned by the scanner of the automatic multi-compartment transmitter-receiver device. Subsequently, the automatic multi-compartment transmitter-receiver device detects the sender's mobile device using geolocation and retrieves the package information from the central computer system in real time.

## Description

This invention relates to a method of sending a package without a label. The invention can be utilised in the field of courier mail shipments.

Patent application P.412379 discloses a method of distribution of packages with the use of a multi-compartment locker device using a central system to manage a network of devices equipped with controls and a means to ensure communication between the user and the locker device; a method that covers the stage of postage, deposition and collection of the package. The method is characteristic in that upon detection by the locker device's detection mechanisms of information assigned to a given package and upon the depositor manually initiating the opening of the locker device, the locker's controls trigger the opening of the compartment least used within the relevant zone of the locker device and-simultaneously-one which has sufficient dimensions to accommodate the package.

Patent application P.410113 discloses a method of package shipment that comprises the stages of marking the package with a marking device, posting the package, circulating the package, as well as delivering the package. The marking stage is not implemented unless the marking limit of the marking device has been reached. At the marking stage, the package shall be marked with the particulars of the shipment rules. The method is characteristic in that the particulars of the shipment rules comprise a unique identifier of the package and a human-readable indication as to the validity of the package; additionally, at the marking stage, the identifier of the package and the marking device identifier is sent to the computer system, whereas at the postage stage, the identifier and package validity indication are checked at least once by comparison with the identifier retrieved from the computer system.

In the case of previously disclosed methods of posting packages without labels, there is the problem of having to enter the data allowing for the package to be posted directly by means of the multi-compartment locker device. This means that it is necessary to touch the buttons or touch screen of the device, which is unhygienic and generates queues at the device, thus increasing the process time. This invention resolves the problem.

A method of posting a package without a label by means of an automatic scanner-equipped transmitter-receiver multi-compartment device, comprising the stages of remote opening of the door of the compartment of the automatic transmitter-receiver multi-compartment device, placing the package inside the compartment of the automatic multi-compartment transmitter-receiver device, automatically locking the door of the compartment of the automatic multi-compartment transmitter-receiver device after its closure, whereby the label generated at the end of the postage process of the package is characteristic in that the entry of the data to be placed on the shipping label occurs by means of the sender's mobile device. The sender's mobile device is communicated with the automatic multi-compartment transmitter-receiver device via a central computer system that generates a virtual shipment with a unique postage code that remains the same throughout the process. The central computer system links the unique postage code to the code on the temporary label applied to the package after its removal from the compartment of the automatic multi-compartment transmitter-receiver device after the code on the temporary label has been scanned by the scanner of the automatic multi-compartment transmitter-receiver device. Subsequently, the automatic multi-compartment transmitter-receiver device detects the sender's mobile device using geolocation and retrieves the package information from the central computer system in real time.

Advantageously, the unique postage code should have the QR form.

The unique postage code may be in numeric form.

It is desirable that the sender's mobile device is a smartphone.

Advantageously, the sender's mobile device is a tablet.

Preferably, the compartment within the automatic multi-compartment transmitter-receiver device is opened via a mobile application

A method of posting a package without a label according to the invention is possible using a mobile application. Therefore, it is necessary to own a phone number and be registered with an application using that number. Following correct verification with a text message code, the user is enabled to track their packages-both those in which the user appears as the recipient and those in which they appear as the sender. The application communicates with the central computer system through the Application Programming Interface (API).

In order to create and post a package without the need for printing a label, the user needs to log in and follow these steps.
1) The user opens a form in the application to define a postage without printing a label;
2) The user selects the preferred place of postage from among available options;
3) The user defines the size and weight of the package;
4) The user enters package recipient data (name and surname, e-mail address, telephone number) and the pickup address (the address of the multi-compartment locker device, recipient address or pickup address-depending on the type of package);
5) The user selects the method of remote payment for the package.
6) The user enters their data:
   - Name and surname;
   - Email address;
   - Phone number identical to the number registered in the application.

If in the database of application users the above data are associated with the phone number, they are completed automatically.

The user may ask to receive a VAT invoice.

After their request to create a package is approved, the user proceeds to make the payment, while at the same time providing data about the created package to the central computer system that generates a unique package number based on the received data.

After receiving information that the payment has been processed correctly, a generated unique postage code is sent to the mobile device. The code may be in 2-D form (QR code) or in numeric form.

At the same time, information about the created package is sent to the recipient's data. If the recipient is a mobile application user, they will receive information about the package that has been sent to them and a full overview of the package status.

At the subsequent stage of posting a package with a postage code, the postage code available in the user's mobile application is sent to the automatic multi-compartment transmitter-receiver device. The postage code is unique and identical for the sender and receiver. Despite the absence of a label at the time of sending, the postage code remains the same throughout the process. This allows the customer to be notified in advance of the start of the logistical process.

Subsequently, the user enters the postage code, either directly on the screen of the automatic multi-compartment transmitter-receiver device or by scanning the QR code available in the mobile application. After scanning, the code is compared by the central computer system, with which the automatic multi-compartment transmitter-receiver device cooperates, with an internal database of postage code templates. The compartment can also be opened remotely using the sender user's mobile application. If the value entered is recognised by the central computer system, the system begins searching for an available compartment of the specified size (identical to or larger than that stated in the package data). If a compartment that meets the conditions is not found, the user is notified that the parcel cannot be placed in the automatic multi-compartment transmitter-receiver device. If a compartment meeting the conditions is found, an attempt is made to open it and the user is notified in which compartment they should place the package. The automatic multi-compartment transmitter-receiver device detects the sender's mobile device using geolocation.

After the package is placed in the compartment and the user closes the compartment door, the central computer system changes the package status to reflect the stage of the process. Retrieval of package information from the central computer system occurs in real time and consists of the following:
- verification of the correctness of the postage code;
- verification of the existence of the package in the central computer system.

The central computer system creates a virtual package that has a permanent, unique postage number. Creating a virtual package allows both the sender as well as the recipient to consistently track the status of the package.

The package is then picked up by a courier. The next step is for the courier to log in to the application. The courier then confirms their presence at the automatic multi-compartment transmitter-receiver device. As the courier collects the label-free package, the courier uses self-adhesive temporary labels that they can place on packages. Subsequently, by using the mobile application, the courier enters the number of any of the temporary labels they have. Later, a central computer system opens the compartment of the automatic multi-compartment transmitter-receiver device containing the relevant label-free package.

The courier then applies a temporary label to the package and takes the package away.

After the courier confirms that the package has been removed from the compartment and a temporary label has been applied to it, the temporary label code entered is linked to the package within the central computer system.

A package with a temporary label is delivered to the logistical operator's facility, where routing data is determined and a label is created for the package. The package is identified using barcode scanners or by manually transcribing the code found on the temporary label. A target label is then printed with the information and size which will allow the package to be processed in the network of the logistical operator. The target label is applied to the package over the temporary label, and then the package is subjected to a traditional logistical process. At this point, the virtual package generated by the central computer system is merged with the posted package.

## Claims

1. A method of posting a package without a label by means of an automatic scanner-equipped multi-compartment transmitter-receiver device, comprised of the stages of remotely opening the door of the compartment of the automatic multi-compartment transmitter-receiver device, placing the package in the compartment of the automatic multi-compartment transmitter-receiver device, automatically locking the door of the compartment of the automatic multi-compartment transmitter-receiver device after its closure, whereby the label generated after the completion of the postage process of the package, **characteristic in** that the entry of data to be placed on the package label occurs by means of the sender's mobile device; furthermore, the sender's mobile device is communicated with the automatic multi-compartment transmitter-receiver device by means of a central computer system which generates a virtual package with a unique package code that remains the same throughout the process, whereby the central computer system assigns the unique postage code to the temporary label code applied to the package upon its removal from the compartment of the automatic multi-compartment transmitter-receiver device after scanning the code placed on the temporary label by the scanner of the automatic multi-compartment transmitter-receiver device, whereby the automatic multi-compartment transmitter-receiver detects the sender's mobile phone, using geolocation and retrieves the information about the package from the central computer system in real time.

2. A method of posting a package without a label according to claim 1, **characteristic in that** the unique postage code has the form of a QR code.

3. A method of posting a package without a label according to claim 1, **characteristic in that** the unique postage code is in numeric form.

4. A method of posting a package without a label according to claim 1, **characteristic in that** the sender's mobile device is a smartphone.

5. A method of posting a package without a label according to claim 1, **characteristic in that** the sender's mobile device is a tablet.

6. A method of posting a package without a label according to claim 1, **characteristic in that** the compartment in the automatic multi-compartment transmitter-receiver device is opened via a mobile application.
